# FASCICULE DE BREVET EUROPEEN

(11) **EP 0 229 568 B1**
(45) Date de publication et mention de la délivrance du brevet: **21.04.1993**
(21) Numéro de dépôt: 86402918.6
(22) Date de dépôt: 23.12.1986
(51) Int. Cl.: F02B 19/16

(54) **Préchambre de combustion à isolation thermique variable**
Vorkammer mit veränderbarer Wärmeisolierung
Precombustion chamber with variable thermal insulation

(30) Priorité: 30.12.1985 FR 8519538
(43) Date de publication de la demande: 22.07.1987
(60) Demande divisionnaire: 89121621.0
(73) Titulaire: INSTITUT FRANCAIS DU PETROLE, 92502 Rueil-Malmaison (FR)
(72) Inventeur: Crestois, Laurent, F-92500 Rueil Malmaison (FR); Herrier, Dominique, F-92500 Rueil Malmaison (FR)

(56) Documents cités:
- DE-C- 544 508
- FR-A- 1 154 656
- FR-A- 2 380 422
- FR-A- 2 479 326
- GB-A- 8 400
- GB-A- 236 233
- GB-A- 403 980
- GB-A- 964 783
- US-A- 4 221 195

## Description

La présente invention concerne les moteurs à combustion interne à préchambre. Le dispositif permet de faire varier le niveau d'isolation thermique de la préchambre de combustion en fonction de la charge du moteur.

Un tel dispositif autorise l'utilisation d'une préchambre de combustion à forte isolation thermique pour les faibles charges de fonctionnement du moteur. L'accroissement de l'isolation thermique de la préchambre s'accompagne d'une amélioration substantielle du rendement thermodynamique du moteur. Ceci reste vrai pour les fortes charges de fonctionnement mais les polluants tels que des oxydes d'azote et fumées s'accroissent. L'augmentation des polluants est due à l'élévation des températures de paroi de la préchambre avec la charge et à une chute progressive du remplissage en air de cette préchambre. Il apparaît donc nécessaire à forte charge de refroidir la préchambre de combustion en réduisant son niveau d'isolation thermique initial.

Les moteurs à combustion interne à préchambre sont généralement équipés de préchambres de combustion fixées dans la culasse. Celles-ci ne sont généralement pas isolées sur le plan thermique et leur état est figé quel que soit le type de fonctionnement du moteur. En particulier, leur résistance thermique est constante.

Le dispositif selon l'invention permet de remédier à cet inconvénient. Il comporte, en effet, une préchambre de combustion présentant un niveau d'isolation élevé. Celui-ci est obtenu au moyen d'une lame d'air ménagée entre la paroi externe de la préchambre et la paroi de culasse. l'abaissement du niveau d'isolation thermique de cette préchambre avec les fortes charges de fonctionnement est obtenu en modifiant le coefficient d'échange thermique gaz de combustion-paroi de préchambre en agissant sur les conditions de turbulences dans la préchambre.

L'art antérieur peut être illustré par les documents DE-C-544.508, GB-A-964.783 et US-A-4.221.195.

La présente invention fournit plus particulièrement une préchambre de combustion logée dans une culasse d'un moteur à combustion interne, cette préchambre comporte une paroi externe et est isolée thermiquement sur une fraction au moins de sa paroi externe par une lame de gaz. Cette préchambre comporte des moyens destinés à faire varier le transfert thermique entre elle-même et la culasse.

De façon caractéristique, les moyens de variation du transfert thermique selon la présente invention sont constitués par un élément, notamment une bougie de préchauffage, adaptée à pénétrer plus ou moins dans la préchambre afin de modifier le mouvement de turbulence dans la préchambre.

Selon une autre caractéristique de l'invention, l'élément pourra être mue par des moyens pneumatiques, hydrauliques ou électriques.

En outre, la commande du mouvement de l'élément pourra dépendre de paramètres de fonctionnement du moteur tels que vitesse de rotation, débit de carburant de pompe à combustible, température d'échappement, etc, et pourra être gérée par un dispositif électronique du type microprocesseur.

La présente invention vise également le procédé destiné à mettre en oeuvre le dispositif prédéfini.

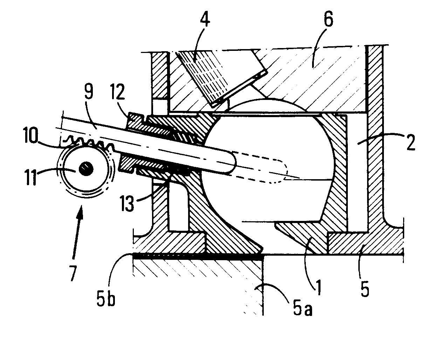

La présente invention sera mieux comprise et ses avantages apparaitront plus clairement à la description qui suit d'exemples particuliers illustrés par la figure annexée qui montre un mode de réalisation comportant une tige amovible.

L'unique figure représente, en coupe, le dispositif selon l'invention. Il comporte une préchambre de combustion 1 du type RICARDO mais l'invention s'applique à tout type de préchambre. La préchambre de combustion est logée dans la culasse 5 et une lame d'air 2 est ménagée autour de cette préchambre. La référence 5a désigne un cylindre du moteur et la référence 5b le joint de culasse de ce moteur.

L'injecteur de combustible 4 est monté sur une pièce 6 qui permet le maintien en position de la préchambre.

Le dispositif comporte une lame d'air 2 comprise entre la préchambre de combustion 1 et la culasse 5 qui assure un bon niveau d'isolation thermique initial. La préchambre est pourvue d'une bougie de préchauffage 9 dont la particularité est de pouvoir pénétrer plus ou moins dans la préchambre. Un mécanisme 7 permet, en effet, le mouvement de va-et-vient de la bougie. Ce mécanisme peut comporter, par exemple, une crémaillère 10 solidaire de la bougie de préchauffage 9 et une roue dentée 11 coopérant avec la crémaillère 10. La pénétration de la bougie 9 dans la préchambre entraîne une variation des conditions d'écoulement des gaz. De ce fait, le coefficient d'échange thermique gaz-paroi de préchambre est modifié ainsi que les échanges thermiques. La variation de la turbulence dans la préchambre peut être réalisée avec un autre objet que la bougie de préchauffage.

Cependant, celle-ci étant indispensable au moteur pour les démarrages à froid, son utilisation est plus simple. L'étanchéité aux gaz autour de cette bougie est réalisée au moyen d'un presse étoupe 12 à joint graphite 13. Ce type de joint résiste aux pressions de combustion d'un cycle de moteur à combustion interne et aux températures élevées.

La pénétration de la bougie 9 dans la préchambre pourra être contrôlée par un dispositif de régulation de tout type mécanique, hydraulique, pneumatique, électrique ou électronique... .

## Revendications

1. Préchambre de combustion (1) logée dans une culasse (5) d'un moteur à combustion interne, ladite préchambre comportant une paroi externe et étant isolée thermiquement sur une fraction au moins de ladite paroi externe par une lame de gaz (2), ladite préchambre comportant des moyens destinés à faire varier le transfert thermique entre ladite préchambre et ladite culasse (15), ladite lame de gaz (2) étant destinée à isoler thermiquement ladite préchambre, caractérisée en ce que lesdits moyens de variation du transfert thermique sont constitués par un élément adaptée à pénétrer plus ou moins dans ladite préchambre afin de modifier le mouvement de turbulence dans la préchambre, ce qui permet de refroidir ladite préchambre à fortes charges.

2. Préchambre selon la revendication 1, caractérisée en ce que l'élément est déplacé par des moyens pneumatiques, hydrauliques ou électriques.

3. Préchambre selon l'une quelconque des revendications 1 ou 2, caractérisée en ce que la commande du mouvement de l'élément dépend de paramètres de fonctionnement du moteur tels que vitesse de rotation, débit de carburant de pompe à combustible, température d'échappement, etc, et peut être gérée par un dispositif électronique du type microprocesseur.

4. Procédé de contrôle du niveau d'isolation d'une préchambre de combustion logée dans la culasse d'un moteur à combustion interne, ladite préchambre étant isolée de ladite culasse par une lame de gaz, sur une fraction au moins de sa paroi externe, le contrôle étant realisé en ce que l'on fait varier le niveau d'isolation de ladite préchambre caractérisé en ce que le niveau d'isolation de ladite préchambre est varié par la modification des mouvements de turbulence dans ladite préchambre grâce à des moyens (notamment constitués d'une bougie de préchauffage) pénétrant plus ou moins dans ladite préchambre, ce qui permet de refroidir ladite préchambre à fortes charges.

## Claims

1. Combustion ante-chamber (1) housed in a cylinder head (5) of an internal combustion engine, the ante-chamber having an external wall and being thermally insulated over at least a part of the external wall by a layer of gas (2), the ante-chamber having means for varying the transfer of heat between the ante-chamber and the cylinder head (5), the layer of gas (2) being intended to thermally insulate the ante-chamber, characterised in that the means for varying the transfer of heat are formed by an element adapted so as to penetrate to a greater or larger degree the ante-chamber in order to modify the flow movement in the ante-chamber enabling the ante-chamber to be cooled at high loads.

2. Ante-chamber in accordance with claim 1, characterised in that the element is moved by pneumatic, hydraulic or electrical means.

3. Ante-chamber in accordance with one of claims 1 or 2, characterised in that the command for instigating movement is dependent on the operating parameters of the engine, such as the speed of revolution, the fuel flow from the fuel pump, the exhaust temperature, etc., and may be controlled by an electronic device of the micro-processor type.

4. Method to control the level of insulation of a combustion ante-chamber housed in the cylinder head of an internal combustion engine, wherein the ante-chamber is insulated from the cylinder head over at least a part of its external wall by a layer of gas, control of this being achieved by varying the level of insulation of the ante-chamber,characterised in that the level of insulation of the ante-chamber is varied by modifying the flow movements in the ante-chamber by means (in particular consisting of a pre-heating element), penetrating the ante-chamber to a greater or lesser degree, which enables the ante-chamber to be cooled at high operating loads.

## Patentansprüche

1. In einem Zylinderdeckel (5) einer Brennkraftmaschine gelagerte Verbrennungsvorkammer (1), die eine Außenwand umfaßt und thermisch über wenigstens einen Teil dieser Außenwand durch einen Luftspalt (2) isoliert ist, wobei diese Vorkammer Mittel umfaßt, die dazu bestimmt sind, den Wärmeübergang zwischen dieser Vorkammer und diesem Zylinderdeckel (15) variieren zu lassen, wobei dieser Luftspalt bzw. diese Luftfeder (2) dazu bestimmt ist, thermisch diese Vorkammer zu isolieren, dadurch gekennzeichnet, daß diese Mittel zur Veränderung des Wärmeübergangs gebildet sind durch ein Element, das so ausgelegt ist, daß es mehr oder weniger in diese Vorkammer eindringt, um die Turbulenzbewegung in der Vorkammer zu modifizieren, was es ermöglicht, diese Vorkammer bei erhöhten Lasten zu kühlen.

2. Vorkammer nach Anspruch 1, dadurch gekennzeichnet, daß das Element durch pneumatische, hydraulische oder elektrische Mittel bewegt wird.

3. Vorkammer nach einem der Ansprüche 1 oder 2, dadurch gekennzeichnet, daß die Bewegungssteuerung des Elements von Arbeitsparametern des Motors wie Rotationsgeschwindigkeit, Brennstoffdurchsatz der Brennstoffpumpe, Auslaßtemperatur etc. abhängt und steuerbar ist durch ein elektronisches Gerät vom Typ Mikroprozessor.

4. Verfahren zum Regeln des Isolationsniveaus einer im Zylinderdeckel einer Brennkraftmaschine mit innerer Verbrennung gelagerten Verbrennungsvorkammer, wobei die Vorkammer gegen diesen Zylinderdeckel durch einen Gasspalt oder eine Gasfeder über wenigstens einen Bruchteil ihrer Außenwand isoliert ist, wobei die Regelung realisiert ist, indem man das Isolationsniveau dieser Vorkammer variieren läßt, wobei das Isolationsniveau dieser Vorkammer verändert wird durch die Modifikation der Turbulenzbewegungen in dieser Vorkammer dank Mitteln (insbesondere gebildet durch eine Vorwärmkerze) die mehr oder weniger in diese Vorkammer eindringen, was es ermöglicht, diese Vorkammer bei hohen Lasten zu kühlen.
